(19) Europäisches Patentamt
European Patent Office
Office européen des brevets

(11) Veröffentlichungsnummer: **0 052 710**
**A2**

# (12) EUROPÄISCHE PATENTANMELDUNG

(21) Anmeldenummer: 81107527.4

(22) Anmeldetag: 22.09.81

(51) Int. Cl.[3]: C 08 G 12/42
C 08 G 12/38, C 08 G 12/32
C 08 L 61/28, C 08 L 61/30
C 09 D 3/50

(30) Priorität: 24.11.80 DE 3044151

(43) Veröffentlichungstag der Anmeldung:
02.06.82 Patentblatt 82/22

(84) Benannte Vertragsstaaten:
AT DE FR GB IT SE

(71) Anmelder: CHEMIE LINZ AKTIENGESELLSCHAFT
St. Peter-Strasse 25
A-4020 Linz(AT)

(84) Benannte Vertragsstaaten:
FR GB IT SE AT

(71) Anmelder: Lentia Gesellschaft mit beschränkter Haftung
Schwanthalerstrasse 39 Postfach 20 16 26
D-8000 München 2(DE)

(84) Benannte Vertragsstaaten:
DE

(72) Erfinder: Czepel, Hubert, Dr.
Marienberg 31
A-4040 Linz(AT)

(72) Erfinder: Heger, Friedl
Altenbergerstrasse 5
A-4040 Linz(AT)

(72) Erfinder: Dobramysl, Wilhelm, Dipl. Ing. Dr.
Boschweg 7
A-4020 Linz(AT)

## (54) Modifizierte Aminoplastharze auf Basis Melamin bzw. Harnstoff und Formaldehyd und deren Verwendung zur Herstellung von dekorativen, hochglänzenden Oberflächenbeschichtungen.

(57) Modifizierte Aminoplastharze auf Basis Melamin bzw. Harnstoff und Formaldehyd, die als Modifizierungsmittel Methylolmelamine mit einem Molverhältnis von Melamin zu Formaldehyd von 1 : (3-6) enthalten, die mit Monoalkoholen mit 1-4 C-Atomen im Verhältnis Melamin zu Alkohol von (1 : (2-6) veräthert sind. Diese Harze dienen insbesondere der Hestellung von dekorativen, hochglänzenden Oberflächenbeschichtungen.

EP 0 052 710 A2

0052710

# Modifizierte Aminoplastharze auf Basis Melamin bzw. Harnstoff und Formaldehyd und deren Verwendung zur Herstellung von dekorativen, hochglänzenden Oberflächenbeschichtungen

Gegenstand der vorliegenden Erfindung sind modifizierte Aminoplastharze auf Basis Melamin oder Harnstoff und Formaldehyd, welche zur Oberflächenbeschichtung eingesetzt werden und die, außer den üblichen Zusätzen, als Modifikatoren mit Monoalkoholen einer C-Anzahl von 1 - 4 verätherte Methylolmelamine enthalten.

Aminoplastharze, insbesondere Melamin-Formaldehydharze zeichnen sich besonders durch große Härte, Kratzfestigkeit, Farblosigkeit bzw. Transparenz, hohen Glanzgrad sowie durch hohe Beständigkeit gegenüber heißem Wasser bzw. Wasserdampf und vielen Chemikalien aus. Sie werden deswegen in Kombination mit Füllstoffen oder Trägermaterialien zur Herstellung von Preßmassen und dekorativen Laminaten verwendet. Ohne den Zusatz von Modifikatoren zeigen sie jedoch bei ihrer Verarbeitung und in ihren Endeigenschaften auch bestimmte Nachteile, wie geringes Fließvermögen während des Härtungs-, d.h. Verarbeitungsprozesses und nach ihrer Aushärtung Neigung zur Rißbildung durch eine naturbedingte Sprödigkeit infolge des mit der Aushärtung verbundenen Vernetzungsvorganges.

Als Modifizierungsmittel sind eine ganze Anzahl mehr oder weniger komplizierter Verbindungen gebräuchlich. So werden für die Herstellung von Laminaten beispielsweise p-Toluolsulfonamid, Sorbit, Äthylenglykol, aber auch Zucker verwendet, allerdings in so großen Mengen (ca. 10 % und mehr bezogen auf flüssiges Imprägnierharz), daß zwar einerseits die Verarbeitbarkeit bzw. Rißanfälligkeit der ausgehärteten Produkte verbessert wird, die Härte, Chemikalienbeständigkeit und der Oberflächenglanz aber herabgesetzt wird. Wesentlich komplizierter und daher auch schwieriger herstellbar sind z.B. in der DE-AS 25 36 978 erst 1979 beschriebene Modifikatoren, die Mischungen von z.B. wasserlöslichen Monoaryläthern von Polyalkylenglykolen mit Hydroxyalkylestern der Acrylsäure und deren Polymerisaten sind, die in einer Stickstoffatmosphäre mit Azodiisobuttersäurenitril als Katalysator hergestellt werden müssen.

Wesentlich leichter herstellbar und gut in ihrer Wirksamkeit sind die nach der AT-PS 295 142 hergestellten Modifikatoren. Dabei handelt es sich um Verbindungen aus Melamin und Formaldehyd, die sich in wasserfreien Lösungsmitteln mit mindestens zwei alkoholischen Hydroxylgruppen z.B. Äthylenglykol bilden, bzw. mit diesen Lösungsmitteln auf einfache Weise weiterreagieren. Sie haben auch den Vorteil, wirksamer, d.h. in geringerer Dosierung (ca. 5 % bezogen auf Flüssigharz) verwendbar zu sein als die Mehrzahl der bisher bekannten Modifikatoren. Dadurch wird der bereits erwähnte nachteilige Einfluß dieser Zusatzmittel auf die ausgehärteten Aminoplastharze verringert.

Nach der DE-PS 23 09 334 (1977) werden statt der üblichen Aminoplastharze zur Imprägnierung von Folien zwecks Beschichtung von Holzwerkstoffen (methanol)-verätherte Methylolmelamine verwendet. Offensichtlich ist aber ihr Glanzgrad, obwohl die üblichen diesbezüglich störenden Zusätze fehlen, schlechter als der der üblichen Aminoplastharze, da zur Erzielung eines hohen Glanzgrades der Zusatz von Vinylacetat ausdrücklich empfohlen wird.

Umso überraschender war die Feststellung, daß der Zusatz derartiger Verbindungen in geringen Mengen zu, mit üblichen Hilfsstoffen, Füllstoffen und dgl. versetzten Aminoplastharzen, deren Glanzgrad entscheidend verbessert.

Gegenstand der Erfindung sind somit modifizierte Aminoplastharze auf Basis Melamin- bzw. Harnstoff und Formaldehyd, welche dadurch gekennzeichnet sind, daß sie als Modifizierungsmittel Methylolmelamine eines molaren Verhältnisses Melamin zu Formaldehyd von 1 : (3 - 6) enthalten, welche mit Monoalkoholen einer Kettenlänge von 1 - 4 C-Atomen im molaren Verhältnis Melamin zu Alkohol von 1 : (2 - 6) veräthert sind.

Verbindungen dieser Art können auf bekannte Weise in Zwei- oder auch Einstufenverfahren hergestellt werden, wobei die Umsetzung zwischen Melamin und Formaldehyd (Methylolierung) meist alkalisch und die Umsetzung der so erhaltenen Zwischenverbindungen mit den Alkoholen (Verätherung) stets sauer katalysiert wird. Ein solches Herstellungsverfahren ist z.B. der DE-AS 23 09 334 zu entnehmen.

Vollverätherte Verbindungen dieser Art haben, wenn sie monomer sind, beispielsweise die nachstehende Strukturformel

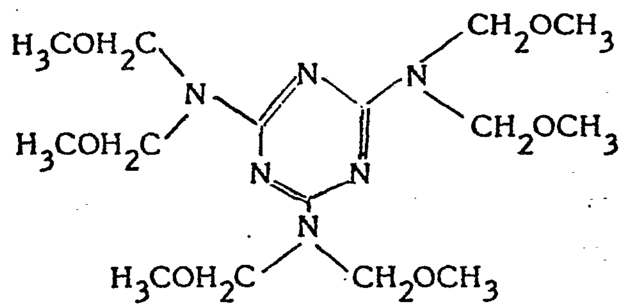

Es handelt sich bei den erfindungsgemäß verwendeten Verbindungen im wesentlichen um mono- bzw. niedermolekulare Stoffe. Als Nebenbestandteil können aber harzartige Anteile mit größerem Molgewicht in diesen Mischungen nicht ausgeschlossen werden.

Diese Modifikatoren werden den Aminoplastharzen vorzugsweise in Mengen von 0,5 - 5 % bezogen auf die wäßrige Lösung eines Aminoplastvorkondensates mit einem Feststoffgehalt von 50 - 65 % zugesetzt, wobei es von besonderem Vorteil ist, daß sie nicht schon zu Beginn der Vorkondensatherstellung zugesetzt werden müssen, wie verschiedene andere Modifikatoren. Man kann sie vielmehr ohne Nachteile in den fertigen Vorkondensatansatz einrühren. Bevorzugt wegen ihrer besonders glanzgradverbessernden Wirkung sind die erfindungsgemäßen Modifikatoren mit einem Molverhältnis Melamin : Formaldehyd : Alkohol von 1 : (4 - 5,5) : (2 - 4).

Ein höherer Anteil an Modifizierungsmittel als 5 % hat keinen störenden Einfluß auf die Modifizierung, ist aber nur bei spezieller Anwendung (z.B. Postforming) sinnvoll.

Unter den für die Verätherung der Methylolmelamine verwendeten Alkoholen wird Methanol wegen des damit zu erzielenden hohen Glanzgrades besonders bevorzugt.

Die erfindungsgemäßen Modifikatoren sind in wäßrigen Aminoplastvorkondensatlösungen gut löslich, mit Ausnahme der vollverätherten Penta- und Hexamethylolmelamine, welche sich aber bei Anwesenheit von niederen Alkohlen im Vorkondensat ebenfalls in Lösung bringen lassen. Die erfindungsgemäßen Modifikatoren wirken auf Aminoplastharze als Elastifikatoren und auch als starke Fließhilfsmittel bei der Verarbeitung, was den Harzen die Eigenschaft verleiht, jede vorgegebene Oberfläche (abhängig vom Preßblech oder der Preßform) besonders gleichmäßig wiederzugeben. Neben guter Beständigkeit gegen Säuren und heißes Wasser bzw. Wasserdampf zeigen auf diese Art modifizierte Harze auch im Vergleich zu mit üblichen Mitteln modifizierten Harzen vor allem einen deutlich erhöhten Glanzgrad.

Die erfindungsgemäßen Modifizierungsmittel werden insbesondere für die Herstellung dekorativer Oberflächen auf Basis Melamin-Formaldehyd-Harz eingesetzt, wobei z.B. Schichten von mit Melamin-Formaldehyd-Harz imprägniertem Papier entweder nach dem Mehretagen-Preßverfahren mit Rückkühlung oder nach dem Kurztakt-Preßverfahren ohne Rückkühlung verpreßt werden. Nach dem ersten Verfahren erhält man von vornherein relativ stark glänzende Oberflächen. Nach dem zweiten Verfahren ist infolge fehlender Rückkühlung der Glanzgrad der hergestellten Oberfläche geringer.

Somit liegt die Bedeutung der erfindungsgemäßen Modifizierungsmittel insbesondere im Einsatz für Harze, die nach dem Kurztaktverfahren verpreßt werden, weil dadurch eine merkliche Glanzverbesserung und eine "ruhigere", gleichmäßige Oberfläche erzielt wird.

Durch die hohe Fließfähigkeit der erfindungsgemäß modifizierten Harze ist es möglich, Spanplatten oder ähnliche Platten aus anderen Werkstoffen, die eine begrenzte Druckfestigkeit haben, z.B. harzgebundene Vermiculiteplatten, unter Anwendung von sehr niedrigen Preßdrücken (ca. 7 bar anstatt üblicherweise 20 - 30 bar) mit Melamin- bzw. Harnstoffharz-imprägnierten Papieren zu

beschichten. Die Beschichtung kann dadurch unter Verwendung wesentlich billigerer Pressen erheblich wirtschaftlicher gestaltet werden.

Eingeschränkt auf diese Verarbeitungsmöglichkeit sind die erfindungsgemäßen Modifikatoren jedoch keineswegs, d.h. sie können gleichermaßen für die Herstellung von Melamin- oder Harnstoff-Formaldehyd-Preßmassen verwendet werden. Die Herstellung der Aminoplastvorkondensate erfolgt auf übliche Weise, das heißt, irgend eine Anpassung ihrer Herstellung an die erfindungsgemäßen Modifikatoren ist überflüssig.

Die nachstehenden Beispiele sollen das erfindungsgemäße Verfahren näher erläutern.

Beispiel 1: Herstellung von Melaminharz-Preßmassen

1.1 Aus 980 g Melamin und 1282 g wäßriger Formaldehyd-Lösung (36,4 %ig) wird ein MF-Vorkondensat mit einem Molverhältnis F/M = 2 durch Kondensation bei $90^{o}C$ und bei pH = 8,2 bis zu einer Wasserverdünnbarkeit von 1 : 0,5 (in Gewichtsteilen, bei $20^{o}C$) hergestellt.
Der End-pH wird auf 9,0 eingestellt.
Zur Preßmassenherstellung werden folgende Stoffe in einem Kneter 1 Stunde bei $40^{o}C$ gemischt:

500 g MF-Harz (Hestellung siehe oben)
162,3 g Zellstoffpulver
21,6 g $TiO_2$
1,1 g Zn-Stearat
0,14 g Phthalsäureanhydrid
15,15 g methylveräthertes Methylolmelamin mit einem Molverhältnis M : F : MeOH = 1 : 4,9 : 2,2 (3 % bezogen auf das Flüssigharz)

Diese Mischung wird bei $80^{o}C$ unter Anwendung von Vakuum auf eine Restfeuchte von ca. 2,6 % getrocknet und gemahlen. Die erhaltene pulverförmige Preßmasse wurde am Brabender-Plasticorder bei $130^{o}C$ Knetertemperatur auf ihre Verarbeitbarkeit getestet. Dabei wurden folgende Werte erhalten:
Verarbeitungszeit: 2,4 min
Minimales Drehmoment (als Maß der Fließfähigkeit): 17,7 kN.m

Beispiel 2: Herstellung von Harnstoffharz-Preßmassen

2.1 Ein UF-Vorkondensat (Molverhältnis F/U = 1,85) wird folgendermaßen hergestellt: 1320 g Formurea (Zusammensetzung 57 % Formaldehyd, 23 % Harnstoff, 20 % Wasser), 504 g Harnstoff, 75 g Melamin, 180 ml Wasser und 90 g wäßrige $NH_3$-Lösung (konzentriert) werden unter Rühren auf $90^{o}C$ erhitzt. Nach Zusatz von 60 ml Wasser und 5 min. Kondensation bei $90^{o}C$ wird der pH-Wert auf 7 gestellt und bis zu einer Wasserverträglichkeit von 1 : 2 (in Gewichtsteilen) kondensiert.

Zur Preßmassenherstellung werden folgende Stoffe in einem Kneter 1 Stunde bei 40°C gemischt:

500 g UF-Harz
162,3 g Zellstoffpulver
21,6 g $TiO_2$
1,1 g Zn-Stearat
7,0 g Melaminphthalat
13,5 g methylveräthertes Methylolmelamin mit einem Molverhältnis M : F : MeOH = 1 : 4,9 : 2,2 (2,7 % bezogen auf Flüssigharz)

Diese Masse wird auf eine Restfeuchte von 2,8 % bei 80°C getrocknet und gemahlen.
Testung der Verarbeitungseigenschaften am Brabender-Plasticorder.
Verarbeitungszeit: 2,5 min.
Minimales Drehmoment: 13,7 kN.m

Beispiel 3:

Ein Melamin-Formaldehyd-Flüssigharz mit einem Molverhältnis F/M = 1,8, einem Festharzgehalt von 55,4 % (Trocknung 2 Stunden bei 120°C) und einem durch eine Wasserverdünnbarkeit von 1:1.4 (in Gewichtsteilen bei 20°C) ausgedrückten Kondensationsgrad wird durch Zusatz von 3 % (bezogen auf das Flüssigharz) eines im Handel befindlichen methylverätheren Methylolmelamins, Molverhältnis M : F : MeOH = 1 : 6 : 5,5 (Cymel 300 - Fa. Cyanamid) modifiziert.

Ferner werden die für die Herstellung von beharzten Papieren üblichen Hilfsstoffe wie Netzmittel, Trennmittel und Verlaufmittel zugesetzt. Durch Zusatz eines latenten Härters wird die auf diese Weise modifizierte Tränkharzlösung auf eine Trübungszeit (bei 100°C) von ca. 1,5 Minuten eingestellt.

Mit dieser Tränkharzflotte wird ein weißes, 80 $g/m^2$ schweres Dekorpapier auf einer Laborimprägniervorrichtung imprägniert (Fa. PWA Unterkochen) und im Umlufttrockenschrank auf eine Restfeuchte von ca. 5 % (10 min. bei 160°C)

getrocknet. Das Endtrockengewicht des imprägnierten Filmes beträgt ca. 200 g/$m^2$. Die so imprägnierten Papiere wurden auf einer Laborpresse bei einer Preßtemperatur von 160°C, einem Preßdruck von ca. 20 bar und einer Preßzeit von einer Minute verpreßt. Die Oberflächeneigenschaften der Beschichtung entsprechen den Anforderungen nach DIN 68765 bzw. DIN 53799. Die Oberfläche der beschichteten Platten zeigt einen gleichmäßigen Hochglanz. Die Glanzwertmessung nach DIN 67530, Meßwinkel 20°, ergab einen Wert von 70 %. Die Ergebnisse dieses und der folgenden Beispiele sind in der Tabelle 1 als Übersicht zusammengestellt.

Beispiel 4:

Es wurde wie in Beispiel 3 verfahren, jedoch wurde als Modifizierungsmittel ein im Handel befindliches methylveräthertes Methylolmelamin mit einem Molverhältnis M : F : MeOH = 1 : 3 : 3 (Prox 15763, Fa. Protex) verwendet. Die Oberflächeneigenschaften der Beschichtung entsprechen den Anforderungen nach DIN 68765 bzw. DIN 53799.

Beispiel 5:

Es wurde wie in Beispiel 3 verfahren, jedoch wurde als Modifizierungsmittel ein methylveräthertes Methylolmelamin mit einem Molverhältnis M : F : MeOH = 1 : 4,9 : 2,2 verwendet.

Die Oberflächeneigenschaften der Beschichtung entsprechen den Anforderungen nach DIN 68765 bzw. DIN 53799.

Tabelle 1

| Beispiel | Molverhältnis M : F : MeOH | Glanzwert DIN 67530 Meßwinkel 20° (%) |
|---|---|---|
| 3 | 1 : 6 : 5,5 | 70 |
| 4 | 1 : 3 : 3 | 70 |
| 5 | 1 : 4,9 : 2,2 | 100 |

Beispiel 6: (Verpressung bei verringertem Druck)

Es wurden Filme, die nach Beispiel 5 hergestellt wurden, verwendet.

Es wurden:
a) Vermiculite-Platten (Thermax-Brandschutzplatte A)
b) Holzspanplatten (mit dreischichtigem Aufbau)
auf einer Laborpresse bei einer Preßtemperatur von 160°C, einer Preßzeit von einer Minute und einem Preßdruck von 7 bar beschichtet. Die Oberflächeneigenschaften der Beschichtung entsprechen den Anforderungen nach DIN 68765 bzw. Din 53799.

Beispiel 7:

Es wurde wie in Beispiel 3 verfahren, jedoch wurde die Modifizierungsmittelmenge auf 0,5 % (bezogen auf Flüssigharz) reduziert.
Die Oberflächeneigenschaften der Beschichtung entsprechen den Anforderungen nach DIN 68765 bzw. DIN 53799.

Beispiel 8:

Es wurde wie in Beispiel 3 verfahren, jedoch wurde die Modifizierungsmittelmenge auf 5 % (bezogen auf Flüssigharz) erhöht.
Die Oberflächeneigenschaften der Beschichtung entsprechen den Anforderungen nach DIN 68765 bzw. DIN 53799.

Beispiel 9: Butylveräthertes Methylolmelamin

Es wurde wie in Beispiel 3 verfahren, jedoch wurde als Modifizierungsmittel ein n-butylveräthertes Methylolmelamin mit einem Molverhältnis Melamin : Formaldehyd : n-Butanol = 1 : 5,5 : 4,6 verwendet.

Die Oberflächeneigenschaften der Beschichtung entsprechen den Anforderungen nach DIN 68 765 bzw. DIN 53 799.

Der Glanzwert nach DIN 67 530 (Meßwinkel 20°) beträgt 70 %.

## Patentansprüche:

1. Modifizierte Aminoplastharze auf Basis Melamin bzw. Harnstoff und Formaldehyd, dadurch gekennzeichnet, daß sie als Modifizierungsmittel Methylolmelamine eines molaren Verhältnisses Melamin zu Formaldehyd von 1 : (3 - 6) enthalten, welche mit Monoalkoholen einer Kettenlänge von 1 - 4 C-Atomen im molaren Verhältnis Melamin zu Alkohol von 1 : (2 - 6) veräthert sind.

2. Modifizierte Aminoplaste nach Anspruch 1, gekennzeichnet durch einen Gehalt an Modifizierungsmittel von 0,5 - 5 %, bezogen auf die wäßrige Lösung eines Aminoplastvorkondensates mit einem Feststoffgehalt von 50 - 65 %.

3. Modifizierte Aminoplastharze nach den Ansprüchen 1 und 2, dadurch gekennzeichnet, daß im Modifzierungsmittel das molare Verhältnis von Melamin : Formaldehyd : Alkohol 1 : (4 - 5,5) : (2 - 4) beträgt.

4. Modifizierte Aminoplastharze nach den Ansprüchen 1 - 3, dadurch gekennzeichnet, daß die Alkoholkomponente des Modifizierungsmittels Methanol ist.

5. Verwendung der modifizierten Aminoplastharze gemäß den Ansprüchen 1 bis 4, zur Herstellung von dekorativen, hochglänzenden Oberflächenbeschichtungen.

6. Verwendung nach Anspruch 5 im Kurztakt-Preßverfahren ohne Rückkühlung.

O.Z.693
3. 9.1981